# EUROPEAN PATENT SPECIFICATION

(11) **EP 0 774 093 B1**
(45) Date of publication and mention of the grant of the patent: **09.09.1998**
(21) Application number: 95928641.0
(22) Date of filing: 21.07.1995
(51) Int. Cl.: F16L 39/00, F16L 15/00

(54) **PIPE JOINT**
ROHRVERBINDUNG
RACCORD DE TUYAUTERIE

(30) Priority: 03.08.1994 NO 942889
(43) Date of publication of application: 21.05.1997
(73) Proprietor: Norsk Hydro ASA, 0240 Oslo 2 (NO)
(72) Inventor: Boee, Einar, 3670 Notodden (NO); Carlsen, Hans-Paul, 3670 Notodden (NO); Holgersen, Stig, 4030 Hinna (NO); Haugerud, Olav Sveinung, 3800 Boe i Telemark (NO)
(74) Representative: Bleukx, Luc
(86) International application number: PCT/NO95/00132
(87) International publication number: WO 96/04502

(56) References cited:
- EP-A- 0 060 549
- DE-A- 1 675 199
- DE-A- 2 904 867
- SE-B- 343 664

## Description

This invention relates to a pipe joint for joining two pipe ends, for hydraulic or electrical signal- or energy transfer, the pipes have one or more longitudinal bores and/or lines or conduits in their walls.

The joint comprises two pipe end sections, a pipe union having internal threads with one section threaded to the left and another section threaded to the right, corresponding respectively to external threads on the pipe end sections.

In production of oil- and/or gas from a reservoir in a geological formation it is desirable to transfer signals concerning production- and equipment parameters, or it may be desirable to transmit electrical or hydraulic energy to equipment used in the reservoir, e. g. for controlling or operation of valves or the like. Often it may be desirable to supply a fluid to the reservoir, e. g. a tracer, a packing fluid or a solution/cleaning agent.

Previously it has been attempted to arrange lines in the walls of a production pipe in an oil/gas well, to transfer signals, energy or a liquid as mentioned above. A production pipe of this type consists of several pipe sections interconnected by pipe joints, and this state of the art joints does not satisfy the demand of fluid tightness and does not have the performing characteristics as foreseen. One example of this state of the art is disclosed in EP 0 489 137 B1.

It is therefore an object of the present invention to provide an improved pipe joint of the above mentioned type, which is durable, simple and inexpensive to produce. A further object of the invention is to provide a joint for easy joining of two pipe ends, where the joint can withstand high pressures.

According to the present invention, the above mentioned advantages are achieved by a pipe joint that is characterised in that the pipe ends are provided with a joining part for mutually centring and locking the two pipe ends, the joining part has joining sleeves that connect the respective bores or lines with each other, to obtain a tight connection between these, as defined in claim 1. The dependent claims 2-7 defines advantageous features of the invention.
One way of carrying out the invention is described in detail below with reference to drawings that illustrate one specific embodiment in which:
- Fig. 1: is an exploded view of a pipe joint in accordance with the invention,
- Fig. 2: is on an enlarged scale one of the two similar pipe ends as shown in fig. 1, viewed at the end and at the section lines A - A,
- Fig. 3: is on an enlarged scale a joining part as shown in fig. 1, viewed at the end and at the section lines B - B.

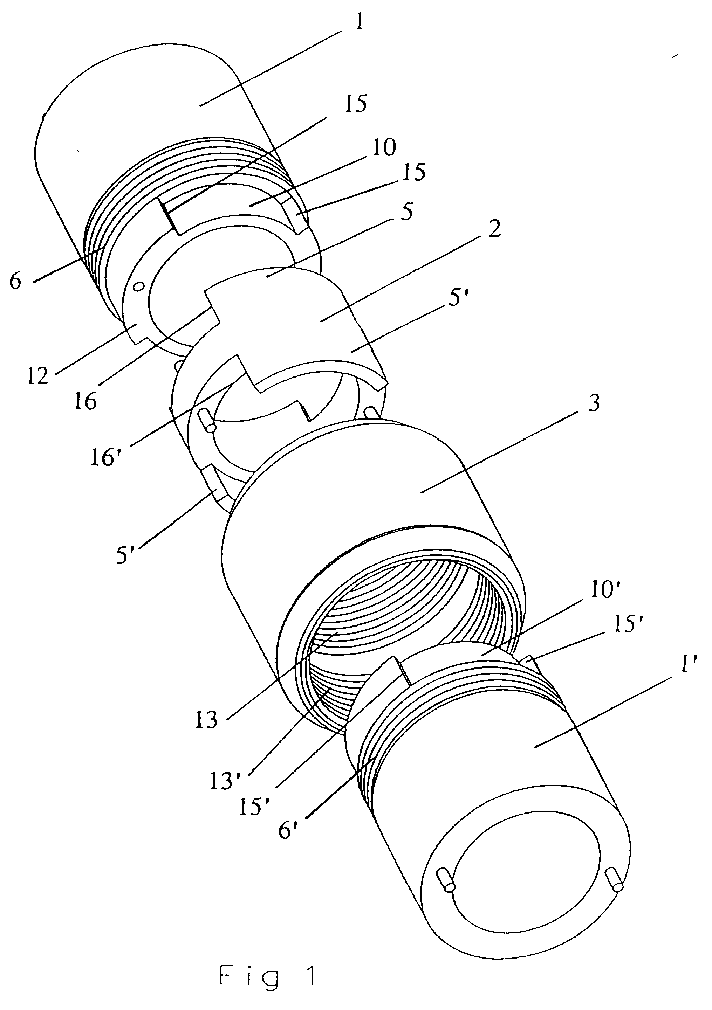

As mentioned above, fig. 1 shows an exploded view of a pipe joint according to the invention. Between the pipes 1,1'(only end sections shown here) the joint comprises a joining part 2. The pipes 1, 1' and the joining part is adapted to be connected by the means of a pipe union 3, provided with two internal threaded sections 13, 13', one section is threaded to the right, the other to the left. The threaded sections correspond respectively to external right- and left oriented threads 6, 6' at the end sections of the pipes.

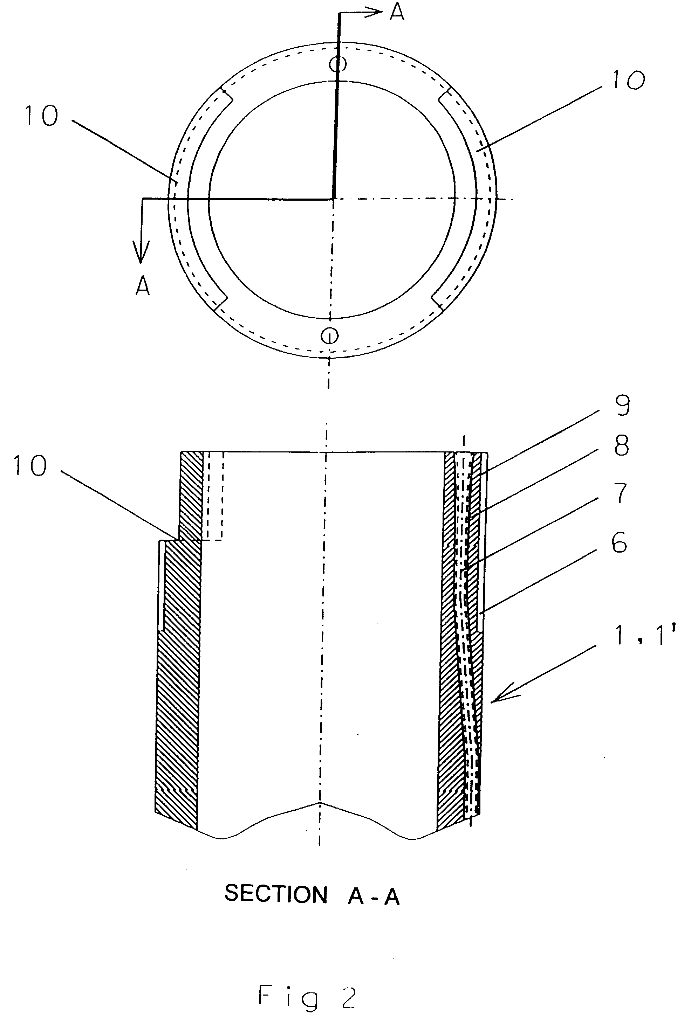

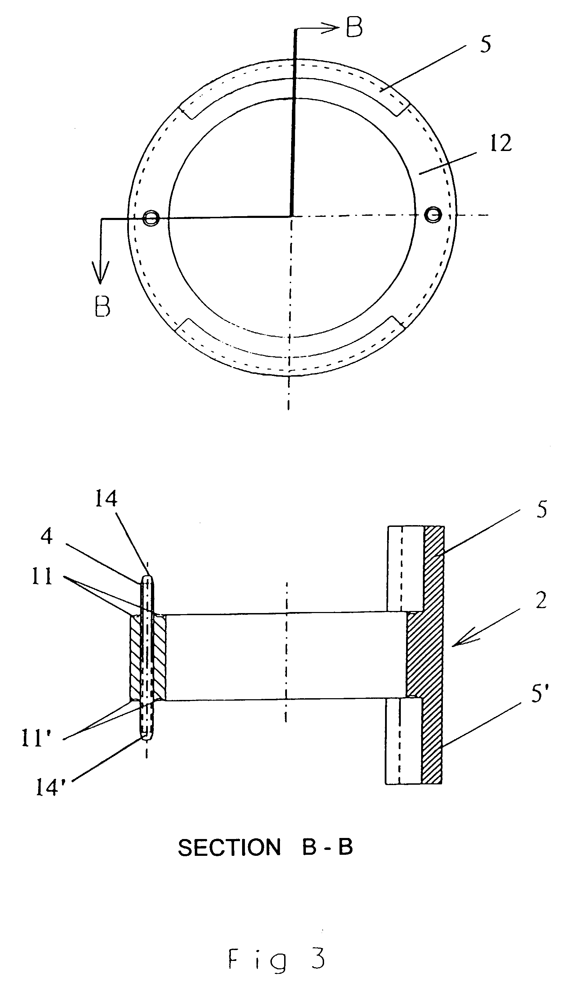

The pipes, or more precisely the pipe end sections, in the joint are identical. Therefore, of practicable reasons, only one pipe end 1 is shown in fig. 2. As will be seen, (see also fig. 1) the pipe end section 1 has two extemal recesses diametrically opposed to each other. The recesses 10 serve as female parts corresponding with male parts 5 formed at the joining part 2 (see a later section).
The pipe 1 may comprise one or more lines 8 for hydraulic fluid, electric cables or the like, longitudinally oriented in a recess or recesses formed in the pipe, where each of said recesses passes on to a bore 7 at the pipe end section. At the end, the bore 7 may advantageously be shaped conical by a reamer, and the line 8 may be expanded into contact with the wall at the outermost part of the conical section 9. Further, the line may advantageously be fixed in the bore 7 at the edge surface of the pipe end by diametrically opposed welded points (not shown) to hold the line in position in the bore before assembling the joint. As will be seen in fig. 3 (see also fig. 1), and as mentioned above, the joining part 2 has a couple of male parts, shaped as diametrically opposed projections that corresponds with the female parts 10, 10' at the pipe end sections 1, 1'. Said male and female parts may advantageously have a minor conical shape (at guiding edges 15, 15' and 16, 16'), and serves both as a device for mutual centring of the two pipe end sections 1, 1', and as a locking device to inhibit mutual rotation of the pipe ends.

The joining part 2 is provided with one or more joining sleeves 4 that protrudes through the bores in the joining part corresponding with the line(s) 8/the bore(s) 7. The joining sleeve 4 is provided with conical shaped ends 14, 14', and when assembling the joint it will be pressed inwardly into the opening of the line 8/the bore 7 such that a tight joint between the corresponding parts is achieved.

End surfaces 11, 11' of the joining part 2 and the end surfaces 12, 12' of the pipes may both advantageously be provided with labyrinth recesses (not shown) to support a lead packing or the like to obtain good tightness between the pipes.

The claimed invention is not limited to the above mentioned device for centring and locking formed as in pairs opposed male and female parts, it may instead be provided with locking pins that protrudes through bores in the joining part and into bores in the two pipe ends 1, 1' (not shown). The joining sleeves may, instead of being arranged in bores through the joining part, be arranged in longitudinal recesses in said part (not shown).

As mentioned above, the pipes 1, 1' may be provided with longitudinal lines 8 or bores 7. This will depend upon the length of the pipes. Thus, for minor pipe lengths it will be relevant to provide the pipe with bores that pass from one end to the other, the bores terminate in conical sections at the pipe ends. Larger pipe lengths may not be drilled throughout its whole length, these pipes may be provided with thin conduits or lines 8 arranged in recesses in the pipes 1, 1', each of which passes on to bores 7 at the end of the pipes 1, 1', as described in the embodiment above.

## Claims

1. Pipe joint for joining two pipe end sections (1, 1'), the pipes have in their walls one or more bores (7) and/or lines (8) for hydraulic or electrical signal-or energy transfer, comprising the two pipe end sections (1, 1'), a pipe union (3) having internal threaded sections, where the sections are threaded to the right and to the left respectively, said sections correspond to similar external threads (6) at the pipe end sections,
**characterized in** that
the pipe joint between the pipe end sections (1, 1') is provided with a joining part (2) arranged to mutually centre and lock the two pipe end sections (1, 1'), where the joining part adjacent each bore (7) or line (8) is provided with a joining sleeve (4) to obtain a tight joint between each of these bores or lines (7, 8).

2. Pipe joint according to claim 1
**characterized in** that
the joining sleeve (4) is arranged in a longitudinal bore in the joining part (2).

3. Pipe joint according to claim 1,
**characterized in** that
the joining sleeve (4) is arranged in a longitudinal recess in the joining part (2).

4. Pipe joint according to claim 1 - 3,
**characterized in** that
the joining sleeve (4) has conical end sections (14, 14') that protrude into corresponding conical sections in the bores (7) and/or the lines (8).

5. Pipe joint according to claim 1-4
**characterized in** that
the joining part (2) arranged to mutually centre and lock the pipe end sections is provided with diametrically opposed projections (5, 5') that correspond with external recesses (10, 10') at the end sections of the pipes.

6. Pipe joint according to claim 5
**characterized in** that
the projections (5, 5') and the recesses (10, 10') is provided with guiding edges having a minor conical shape (15, 15', 16, 16').

7. Pipe joint according to claim 1,
**characterized in** that
the end surfaces (11, 11') of the joining part (2) and the end surfaces (12, 12') of the pipe ends (1, 1') have labyrinth recesses to support a packing of lead or the like.

## Patentansprüche

1. Rohrverbindung zum Verbinden von zwei Rohrendabschnitten (1, 1') von Rohren die in ihren Wänden eine oder mehrere Bohrungen (7) und/oder Leitungen (8) zum Übermitteln von Signalen oder Energie von hydraulischer oder elektrischer Natur aufweisen, dabei umfaßt diese Rohrverbindung zwei Rohrendabschnitte (1, 1'), eine Rohrverbindung (3) mit innenliegenden Gewindeabschnitten, wobei die Abschnitte mit einem Rechtsgewinde beziehungsweise mit einem Linksgewinden versehen sind und wobei die Abschnitte ähnlichen außenliegenden Gewinden (6) an den Rohrendabschnitten entsprechen, dadurch gekennzeichnet, daß die Rohrverbindung zwischen den Rohrendabschnitten (1, 1') mit einem Verbindungsteil (2) versehen ist, welches so ausgelegt ist, daß es die zwei Rohrendabschnitte (1, 1') gegenseitigen zentriert und verriegelt, wobei der an jede Bohrung (7) oder Leitung (8) angrenzende Verbindungsteil mit einer Verbindungsmuffe (4) ausgestattet ist, um eine dichte Verbindung zwischen jeder einzelnen dieser Bohrungen oder Leitungen (7, 8) zu erzielen.

2. Rohrverbindung gemäß dem Patentanspruch 1, dadurch gekennzeichnet, daß die Verbindungsmuffe (4) in einer Längsbohrung in dem Verbindungsteil (2) angeordnet ist.

3. Rohrverbindung gemäß dem Patentanspruch 1, dadurch gekennzeichnet, daß die Verbindungsmuffe (4) in einer Längsvertiefung in dem Verbindungsteil (2) angeordnet ist.

4. Rohrverbindung gemäß den Patentansprüchen 1-3, dadurch gekennzeichnet, daß die Verbindungsmuffe (4) konische Endabschnitte (14, 14') aufweist, welche in die entsprechenden konischen Abschnitte in den Bohrungen (7) und/oder Leitungen (8) hineinragen.

5. Rohrverbindung gemäß den Patentansprüchen 1-4, dadurch gekennzeichnet, daß der Verbindungsteil (2), der angeordnet ist um die Rohrendabschnitte gegenseitig zu zentrieren und zu blockieren, mit einander diametral gegenüberliegenden Projektionen (5, 5') versehen ist, welche außenliegenden Vertiefungen (10, 10') an den Endabschnitten der Rohre entsprechen.

6. Rohrverbindung gemäß dem Patentanspruch 5, dadurch gekennzeichnet, daß die Projektionen (5, 5') und die Vertiefungen (10, 10') mit Führungsrändern ausgestattet sind, welche eine leicht konische Form (15, 15', 16, 16') aufweisen.

7. Rohrverbindung gemäß dem Patentanspruch 1, dadurch gekennzeichnet, daß die Endoberflächen (11, 11') des Verbindungsteiles (2) und die Endoberflächen (12, 12') der Rohrenden (1,1') labyrinthförmige Vertiefungen aufweisen um eine Auflagerung für eine Bleidichtung oder ähnliche Hilfsmittel zu bilden.

## Revendications

1. Raccord de tuyauterie servant à assembler deux sections d'extrémité de tuyau (1, 1'), les tuyaux étant pourvus dans leurs parois d'un ou de plusieurs alésages (7) et/ou de canalisations (8) pour le transfert de signaux ou d'énergie hydrauliques ou électriques, comprenant les deux sections d'extrémité de tuyau (1, 1'), un raccord pour tuyaux (3) pourvu à l'intérieur de sections filetées, où les sections sont filetées à droite et à gauche respectivement, lesdites sections correspondant à des filetages externes similaires (6) sur les sections d'extrémité de tuyau, caractérisé en ce que le raccord de tuyauterie entre les sections d'extrémité de tuyau (1, 1') est pourvu d'un élément de jonction (2) arrangé pour centrer et verrouiller mutuellement les deux sections d'extrémité de tuyau (1, 1'), où l'élément de jonction adjacent à chaque alésage (7) ou canalisation (8) est pourvu d'un manchons de liaison (4) pour obtenir une jonction étanche entre chaque alésage ou canalisation (7, 8).

2. Raccord de tuyauterie conforme à la revendication 1, caractérisé en ce que le manchon de liaison (4) est arrangé dans un alésage longitudinal dans l'élément de jonction (2).

3. Raccord de tuyauterie conforme à revendication 1, caractérisé en ce que le manchon de liaison (4) est arrangé dans une encoche longitudinale dans l'élément de jonction (2).

4. Raccord de tuyauterie conforme aux revendications 1-3, caractérisé en ce que le manchon de liaison (4) possède des sections d'extrémité coniques (14, 14') qui font saillie à l'intérieur de sections coniques correspondantes dans les alésages (7) et/ou dans les canalisations (8).

5. Raccord de tuyauterie conforme aux revendications 1-4, caractérisé en ce que l'élément de jonction (2), conçu pour centrer et verrouiller mutuellement les sections d'extrémité de tuyau, est pourvu de projections diamétralement opposées (5, 5') qui correspondent à des encoches externes (10, 10') dans les sections d'extrémité des tuyau.

6. Raccord de tuyauterie conforme à la revendication 5, caractérisé en ce que les projections (5, 5') et les encoches (10, 10') sont pourvues de contours de guidage ayant une forme légèrement conique (15, 15', 16, 16')

7. Raccord de tuyauterie conforme à la revendication 1, caractérisé en ce que les surfaces d'extrémité (11, 11') de l'élément de jonction (2) et les surfaces d'extrémité (12, 12') des extrémités de tuyaux (1, 1') sont garnies de rainures à labyrinthes destinées à donner appui à un bourrage en plomb ou élément équivalent.
